# EUROPÄISCHE PATENTANMELDUNG

(11) **EP 1 369 347 A1**
(43) Veröffentlichungstag der Anmeldung: **10.12.2003**
(21) Anmeldenummer: 02020037.4
(22) Anmeldetag: 06.09.2002
(51) Int. Cl.: B63B 3/68, B63J 2/08

(54) **Paneel für den Boden eines gekühlten Schiffsladeraumes**

(30) Priorität: 06.06.2002 DE 20208867 U
(71) Anmelder: Eloesser, Michael, 60323 Frankfurt am Main (DE)
(72) Erfinder: Eloesser, Michael, 60323 Frankfurt am Main (DE)
(74) Vertreter: Bliez, Anja

(57) **Zusammenfassung**

Ein Paneel für den Boden eines gekühlten Schiffsladeraums hat eine langgestreckte Form und besteht aus verstärktem Kunststoff. Es hat sich in seiner Längsrichtung erstreckende Hohlräume (2, 3, 4), von denen wenigstens einige (3) in ihrer Oberseite (5) und ihrer Unterseite (6) durchgehende Löcher (7) aufweisen. Gegenüber bekannten Paneelen aus Holz oder Metall hat es eine längere Lebensdauer, ist es leichter zu handhaben und einfacher herzustellen, aber dennoch hoch belastbar.

## Beschreibung

Die Erfindung betrifft ein Paneel für den Boden eines gekühlten Schiffsladeraums.

Bekannte Paneele dieser Art, die derzeit für Böden gekühlter Schiffsladeräume verwendet werden, bestehen aus Holz oder Metall. Die Böden werden mit Gabelstaplern befahren und müssen dementsprechend abriebfest sein, was bei Holzböden nicht hinreichend gewährleistet ist. Metallböden müssen korrosionsfest sein, was ebenfalls bei den üblichen Metallböden nicht hinreichend gewährleistet ist. Die bekannten Paneele haben ferner im Verhältnis zu ihrer Länge eine große Breite. Sie sind folglich nahezu quadratisch, um eine möglichst große Fläche abdecken zu können. Sodann ist ihre Bauhöhe entsprechend groß, um eine hinreichende Festigkeit zu erreichen. Sie haben dementsprechend ein hohes Gewicht. Aufgrund ihrer großen Fläche und ihres hohen Gewichts sind sie schwierig zu handhaben. Die Holzpaneele bestehen aus verleimten Schichten. Ihre Herstellung ist mithin ebenso wie die der Metallpaneele aufwendig.

Der Erfindung liegt die Aufgabe zugrunde, ein Paneel der eingangs genannten Art anzugeben, das eine längere Lebensdauer aufweist, leichter zu handhaben und einfacher herzustellen, aber dennoch hoch belastbar ist.

Erfindungsgemäß ist diese Aufgabe dadurch gelöst, daß das Paneel langgestreckt ist und faserverstärkten Kunststoff sowie sich in seiner Längsrichtung erstrekkende Hohlräume aufweist, von denen wenigstens einige in ihrer Oberseite und in ihrer Unterseite durchgehende Löcher aufweisen.

Bei dieser Lösung ist das Paneel leichter und rascher herstellbar, vorzugsweise durch Pultrusion. Aufgrund der Hohlräume ist es relativ leichtgewichtig, aber dennoch aufgrund der Faserverstärkung hoch belastbar, wozu auch die seitlichen Wände der Hohlräume beitragen, da sie ein hohes Flächenträgheitsmoment mit entsprechend hoher Biegesteifigkeit ergeben, insbesondere wenn die Hohlräume durch senkrecht zur Ebene des Paneels stehende Wände begrenzt sind. Das Paneel kann eine dementsprechend geringe Bauhöhe aufweisen. Sodann kann es relativ schmal im Vergleich zu seiner Länge sein. Man kommt daher beim Pultrudieren mit einem entsprechend kleinen und kostengünstigen Formwerkzeug aus, und das Paneel ist leichter zu handhaben als eine breite und sperrige, schwere Platte. Die Löcher ermöglichen einen Zutritt von Kühlluft aus einer unterhalb des Bodens installierten Kühlanlage.

Vorzugsweise weist der Kunststoff eines der Polymere Polyester-, Epoxid-, Venyl-, Acryl- und Phenolharz auf. Diese Kunststoffe lassen sich leicht verarbeiten, korrodieren nicht und haben eine hohe mechanische Festigkeit.

Als Verstärkungsfasern sind besonders solche aus Glas, Kohle, Kunststoff, Metall, Hanf oder Jute geeignet. Wenn sie in Längsrichtung des Paneels ausgerichtet oder unregelmäßig angeordnet sind, erhält das Paneel eine besonders hohe Biegefestigkeit, so daß es auch bei sehr flacher (dünner) Ausbildung hohen Belastungen standhält.

Vorzugsweise ist die Oberseite des Paneels in Querrichtung gewellt. Diese Wellungen tragen zusätzlich durch ihre Längsseiten zur Biegesteifigkeit bei, verhindern aber gleichzeitig eine vollflächige Auflage der Lasten, bei denen es sich zumeist um beladene Paletten oder Container handelt, deren Unterseite weitgehend eben ist. Die Welligkeit des Paneels ermöglicht einen leichteren Zutritt von Kühlluft an die Unterseite der Lasten durch die Löcher hindurch aus einer unterhalb des Bodens installierten Kühlanlage, insbesondere wenn die Löcher in den Wellentälern liegen.

Wenn die Löcher in der Oberseite mit denen in der Unterseite fluchten, ist der Strömungswiderstand für die Kühlluft besonders gering.

Sodann kann das Paneel auf seiner einen Längsseite eine hinterschnittene, sich über die Länge des Paneels erstreckende Nut und auf der anderen Längsseite einen dem Querschnitt der Nut im Querschnitt angepaßten, sich über die Länge des Paneels erstreckenden Vorsprung aufweisen. Dadurch lassen sich auf einfache Weise mehrere Paneele nebeneinander zu einer größeren Fläche zusammensetzen, in dem die Vorsprünge in die Nuten benachbarter Paneele eingeführt werden, so daß sich eine sogenannte Feder-Nut-Verbindung ergibt, die darüber hinaus die Biegesteifigkeit des Bodens erhöht.

Zusätzlich kann die Nut auf ihrem Boden eine sich in ihrer Längsrichtung erstreckende Rippe aufweisen, deren Querschnitt dem Querschnitt einer weiteren Nut in dem auf der anderen Seite des Paneels ausgebildeten Vorsprung angepaßt ist. Diese Rippe und die weitere Nut tragen zusätzlich zur Erhöhung der Biegesteifigkeit bei.

Die Erfindung und ihre Weiterbildungen werden nachstehend anhand der beiliegenden Zeichnungen eines bevorzugten Ausführungsbeispiels näher beschrieben. Darin stellen dar:
- Fig. 1: einen Querschnitt durch ein erfindungsgemäßes Paneel und
- Fig. 2: einen Teil eines Bodens eines gekühlten Schiffsladeraums aus zusammengesetzten, erfindungsgemäß ausgebildeten, in kleinerem Maßstab dargestellten Paneelen.

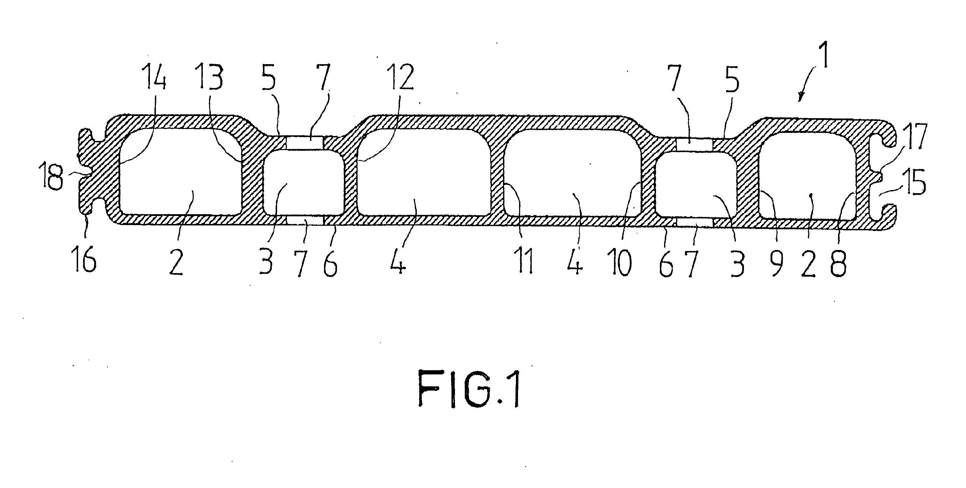

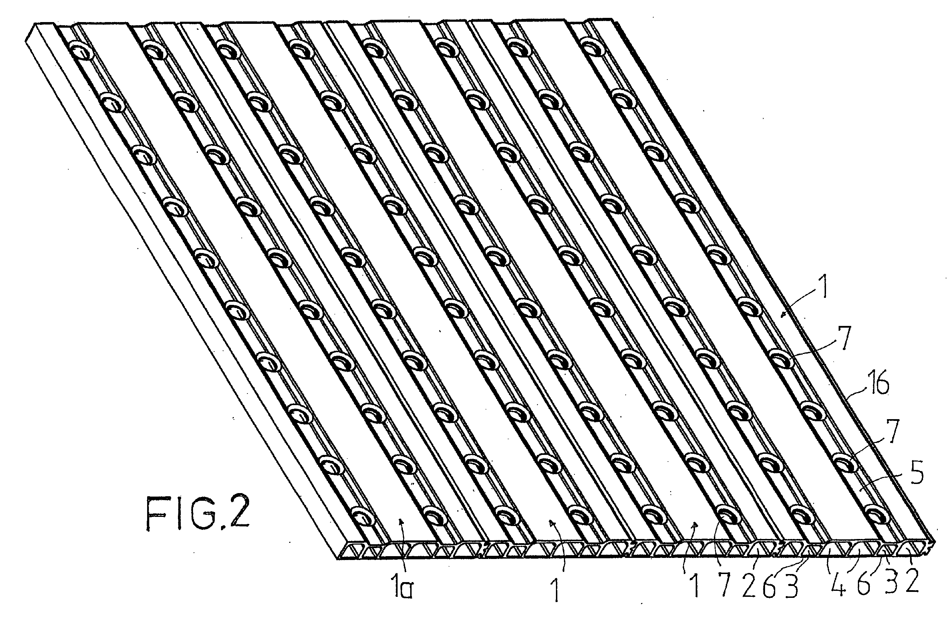

Das nach Fig. 1 im Querschnitt dargestellte Paneel 1 hat gemäß Fig. 2 eine langgestreckte Form und weist faserverstärkten Kunststoff auf. Es hat sich in seiner Längsrichtung erstreckende Hohlräume 2, 3 und 4. Die zwischen den Hohlräumen 2 und 4 liegenden Hohlräume 3 haben einen kleineren Querschnitt als die Hohlräume 2 und 4. Die beiden mittleren Hohlräume 4 haben einen größeren Querschnitt als die beiden äußeren Hohlräume 2. Insgesamt hat ein Paneel mithin sechs Hohlräume. Die Zahl der Hohlräume 2 - 4 kann jedoch entsprechend der jeweiligen Breite des Paneels, die etwa 20 bis 60 cm betragen kann, unterschiedlich sein. Die im Querschnitt kleinsten Hohlräume 3 haben in ihrer Oberseite 5 und in ihrer Unterseite 6 jeweils eine Reihe durchgehender Löcher 7 mit gleichem Querschnitt, die miteinander fluchten. Die Hohlräume 2, 3 und 4 sind durch senkrecht zur Ebene des Paneels 1 stehende Wände 8 - 14 begrenzt. Die Oberseite 5 des Paneels ist etwa trapezförmig gewellt, wobei die in der Oberseite 5 ausgebildeten Löcher 7 in den Wellentälern liegen. Jedes Paneel 1 hat auf seiner einen Längsseite eine hinterschnittene, sich über die Länge des Paneels 1 erstreckende Nut 15 und auf der anderen Längsseite einen dem Querschnitt der Nut 15 im Querschnitt angepaßten, sich über die Länge des Paneels 1 erstreckenden Vorsprung 16. Ein am äußeren Seitenrand liegendes Paneel 1a hat dagegen nur auf seiner einen, dem benachbarten Paneel 1 zugekehrten Längsseite eine sich über die Länge des Paneels 1 erstreckende Nut 15. Im übrigen ist das am Rande liegende Paneel 1a ebenso wie die übrigen Paneele 1 ausgebildet. Die Nut 15 hat auf ihrem Boden eine sich in ihrer Längsrichtung erstreckende Rippe 17 (Fig. 1), deren Querschnitt dem Querschnitt einer weiteren Nut 18 in dem auf der anderen Seite des Paneels 1 ausgebildeten Vorsprung 17 angepaßt ist.

Die Paneele 1, 1a bestehen aus faserverstärktem Kunststoff, bei dem es sich vorzugsweise um eines der Polymere Polyester-, Epoxid-, Venyl-, Acryl- und Phenolharz handelt. Die Verstärkungsfasern bestehen vorzugsweise aus Glas, Kohle, Kunststoff, Metall, Hanf oder Jute und sind in Längsrichtung des Paneels ausgerichtet oder unregelmäßig angeordnet.

Jedes Paneel 1, 1a ist leicht und rasch herstellbar, z.B. durch Pultrusion. Aufgrund der Hohlräume 2, 3 und 4 ist es relativ leichtgewichtig, aber dennoch aufgrund der Faserverstärkung hoch belastbar. Dazu tragen auch die Wände 8 - 14 der Hohlräume 2 - 4 bei, da sie senkrecht zur Ebene des jeweiligen Paneels 1, 1a stehen und somit ein hohes Flächenträgheitsmoment mit entsprechend hoher Biegesteifigkeit ergeben.

Die Wellung der Oberseite 5 des Paneels trägt zusätzlich durch ihre Längsseiten zur Biegesteifigkeit bei, verhindert aber gleichzeitig eine vollflächige Auflage von Lasten, bei denen es sich zumeist um beladene Paletten oder Container handelt, deren Unterseite weitgehend eben ist. Die Welligkeit ermöglicht darüber hinaus einen leichteren Zutritt von Kühlluft an die Unterseite der Lasten durch die Löcher 7 hindurch aus einer unterhalb des Bodens installierten Kühlanlage. Dabei wird der Strömungswiderstand der Löcher dadurch verringert, daß die in der Oberseite 5 ausgebildeten Löcher mit den in der Unterseite 6 ausgebildeten Löchern des gleichen Hohlraums 3 fluchten. In die Nut 15 jedes Paneels 1, 1a kann der Vorsprung 16 eines anderen Paneels 1 eingeführt werden, um aus den Paneelen 1, 1a einen Boden zusammenzusetzen, wie er in Fig. 2 teilweise dargestellt ist. Der Eingriff des Vorsprungs 16 eines Paneels in die Nut 15 eines benachbarten Paneels stellt eine sogenannte Feder-Nut-Verbindung dar, die nicht nur einfach herzustellen ist, sondern auch zur Versteifung der Bodenplatte beiträgt. Bei der Herstellung der Verbindung greift gleichzeitig eine sich am Boden der Nut 15 in deren Längsrichtung erstreckende Rippe 17 in eine weitere Nut 18 in dem Vorsprung 16 eines benachbarten Paneels ein, so daß sich eine zusätzliche Versteifung des Bodens des Laderaums und der Verbindung ergibt.

Die Faserverstärkung jedes Paneels 1, 1a ergibt eine zusätzliche Erhöhung der Biegefestigkeit, während die Hohlräume 2, 3 und 4 zur Verringerung des Gewichts bei dennoch hoher Biegesteifigkeit beitragen. Das Material der Paneele 1, 1a ist darüber hinaus sehr abriebfest und korrodiert nicht.

## Patentansprüche

1. Paneel (1; 1a) für den Boden eines gekühlten Schiffsladeraums, **dadurch gekennzeichnet, daß** das Paneel (1; 1a) langgestreckt ist und faserverstärkten Kunststoff sowie sich in seiner Längsrichtung erstreckende Hohlräume (2, 3, 4) aufweist, von denen wenigstens einige (3) in ihrer Oberseite (5) und in ihrer Unterseite (6) durchgehende Löcher (7) aufweisen.

2. Paneel nach Anspruch 1, **dadurch gekennzeichnet, daß** die Hohlräume (2 - 3) durch senkrecht zur Ebene des Paneels (1; 1a) stehende Wände (8 - 14) begrenzt sind.

3. Paneel nach Anspruch 1 oder 2, **dadurch gekennzeichnet, daß** der Kunststoff eines der Polymere Polyester-, Epoxid-, Venyl-, Acryl- und Phenolharz aufweist.

4. Paneel nach einem der Ansprüche 1 bis 3, **dadurch gekennzeichnet, daß** die Verstärkungsfasern aus Glas, Kohle, Kunststoff, Metall, Hanf oder Jute bestehen.

5. Paneel nach einem der Ansprüche 1 bis 4, **dadurch gekennzeichnet, daß** die Verstärkungsfasern in Längsrichtung des Paneels ausgerichtet oder unregelmäßig angeordnet sind.

6. Paneel nach einem der Ansprüche 1 bis 5, **dadurch gekennzeichnet, daß** seine Oberseite in Querrichtung gewellt ist.

7. Paneel nach Anspruch 6, **dadurch gekennzeichnet, daß** die in der Oberseite (5) ausgebildeten Löcher (7) in den Wellentälern liegen.

8. Paneel nach einem der Ansprüche 1 bis 7, **dadurch gekennzeichnet, daß** die Löcher (7) in der Oberseite (5) mit denen in der Unterseite (6) fluchten.

9. Paneel nach einem der Ansprüche 1 bis 8, **dadurch gekennzeichnet, daß** es auf seiner einen Längsseite eine hinterschnittene, sich über die Länge des Paneels (1) erstreckende Nut (15) und auf der anderen Längsseite einen dem Querschnitt der Nut (15) im Querschnitt angepaßten, sich über die Länge des Paneels (1) erstreckenden Vorsprung (16) aufweist.

10. Paneel nach Anspruch 9, **dadurch gekennzeichnet, daß** die Nut (15) auf ihrem Boden eine sich in ihrer Längsrichtung erstreckende Rippe (17) aufweist, deren Querschnitt dem Querschnitt einer weiteren Nut (18) in dem auf der anderen Seite des Paneels (1) ausgebildeten Vorsprung (17) angepaßt ist.
